# EUROPEAN PATENT SPECIFICATION

(11) **EP 1 304 284 B1**
(45) Date of publication and mention of the grant of the patent: **14.05.2008**
(21) Application number: 02023647.7
(22) Date of filing: 21.10.2002
(51) Int. Cl.: B62K 21/18, B62K 21/02, B62K 25/08

(54) **Straddling type vehicle**
Im Grätschsitz zu fahrendes Fahrzeug
Vehicule monté à califourchon

(30) Priority: 19.10.2001 JP 2001322087
(43) Date of publication of application: 23.04.2003
(73) Proprietor: Yamaha Hatsudoki Kabushiki Kaisha, Iwata-shi, Shizuoka-ken 438 (JP)
(72) Inventor: Hideo, Kohda, Iwata-shi, Shizuoka-ken (JP)
(74) Representative: Grünecker, Kinkeldey, Stockmair & Schwanhäusser Anwaltssozietät

(56) References cited:
- EP-A- 0 490 120
- DE-A- 2 911 335
- FR-A- 2 758 787
- GB-A- 597 036
- GB-A- 640 590
- US-A- 4 542 910

## Description

The present invention relates to a straddling type vehicle according to the preamble of claim 1. Document FR-A-2758787 shows such a straddling type vehicle..

The steering shaft for free turning about its longitudinal axis is supported at a front upper part of the body frame of the vehicle, and the front fork is supported with its upper end at the lower end of the steering shaft while with its lower end supporting a front wheel.

The front fork is made up of: a bracket supported with the lower end of the steering shaft, paired right and left tubes extending down with the front wheel supported at the lower ends of the right and left tubes. Handlebars are supported at the top end of the steering shaft and the front fork from the front steering construction.

When a rider rides and steers the vehicle by gripping the handlebars, the front wheel is steered through the steering shaft and the front fork as interlocked with the handlebars.

According to the conventional art, the bracket and the tubes of the front fork are formed separately and then put together into the front fork. In this way, however, the constitution and also forming the front fork are complicated because of the large number of components.

Further, the connecting portion between the bracket and the upper tubes of the front fork is subjected to heavy loads due to impact forces from the front wheel when the vehicle is driven. Therefore, the connecting portion is conventionally required of a high strength.

It is therefore an object of the present invention to solve the problems above and to improve a straddling type vehicle of the above kind so that the front fork is simplified in both constitution and forming, and improved in strength.

For a straddling type vehicle, this object is solved in an inventive manner according to the features of claim 1. Further embodiments of the invention are subject to the subclaims..

The straddling type vehicle comprises a front fork having a steering shaft supported for free turning about its longitudinal axis at a front upper end portion of a vehicle body frame and the front fork with its upper end supported with the lower end of said steering shaft, with said front fork being made up of: a bracket supported with the lower end of said steering shaft, paired right and left upper tubes, extending down in straight lines from the right and left side portions of said bracket, and paired right and left lower tubes fitted for free axial sliding into the lower end sides of said paired right and left upper tubes, wherein said bracket and said right and left upper tubes are formed integrally with each other, and the upper end portions of said respective upper tubes are extended up beyond the top surfaces of said right and left side portions of said bracket.

It further comprises respective lower tubes being fitted into the extended end sides of said respective upper tubes, and with springs for urging downward said respective lower tubes being provided in the spaces in said respective upper tubes, wherein at least part of said spring is placed in the space within the upper end of said upper tube.

In the following, preferred embodiments are described in greater detail with reference to the appended drawings, wherein:
- FIG. 1: is a partial sectional view as seen in the direction of arrows 1-1 in FIG. 3,
- FIG. 2: is an overall side view of a vehicle,
- FIG. 3: is an enlarged partial view of FIG. 2, and
- FIG. 4: is a view corresponding to a part of FIG. 1 according to the invention.

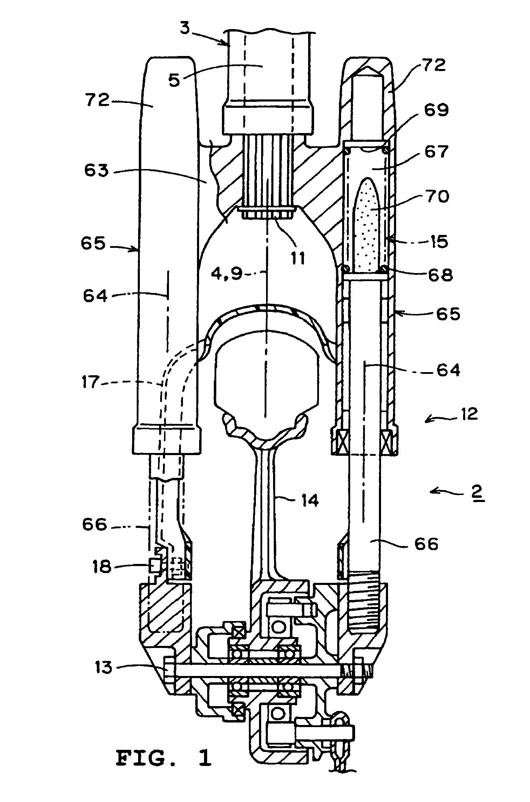

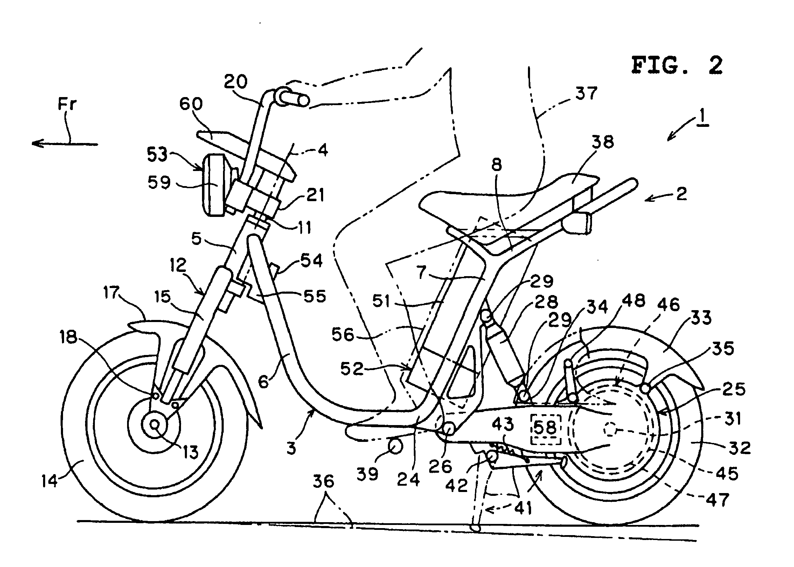

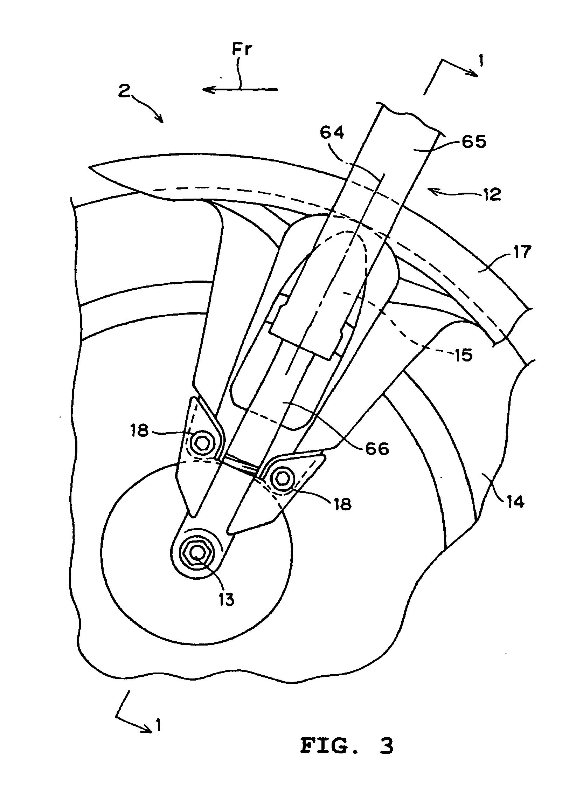

FIGs. 1 to 3 show a straddling type vehicle which is not part of the invention as defined in claim 1. FIG. 2 shows a straddling type vehicle 1, an electric motor-operated two wheeled vehicle as a specific example. The arrow Fr indicates the forward direction of the vehicle 1, and the terms right and left refer to the directions of the width of the vehicle body 2 of the vehicle 1 as seen from behind.

The vehicle body frame 3 of the vehicle body 2 is made up of: a head pipe 5 with its axis 4 extending generally vertically down forward, paired right and left down tubes 6, 6 extending downward from the head pipe 5, paired right and left back stays 7, 7 extending up rearward. from the extended end portions of the down tubes 6, 6, and an upper frame 8 interconnecting the extended end portions of the back stays 7, 7. The vehicle body frame 3 is made in right-left symmetry with respect to the imaginary vertical plane that passes through the vehicle body center 9, the center of the width of the vehicle body 2.

The upper ends of the right and left down tubes 6, 6 are fixed to parts of the head pipe 5 on right and left sides in the middle of the length of the head pipe 5. The right and left down tubes 6, 6 are formed to be apart farther from each other in the direction of the width of the vehicle body 2 as they extend from the head pipe 5 side downward and rearward. The lower portions of the right and left down tubes 6, 6 extend generally parallel to each other and also the back stays 7, 7 extend generally parallel to each other.

A steering shaft 11 for free turning about the axis 4 is fitted into the head pipe 5, on the axis 4, and supported with a bearing in the head pipe 5.

A front fork 12 is provided to extend downward from the lower end side of the steering shaft 11, with the upper end of the front fork 12 supported with the lower end of the steering shaft 11. A front wheel 14 for free rotation about a wheel shaft 13 is supported with the wheel shaft 13 at the lower end, or extended end, of the front fork 12. The front fork 12 is provided with dampers 15. A plastic-made front fender 17 is provided to cover the front wheel 14 from above. The front fender 17 is fixed and supported with tightening members 18 at the lower end of the front fork 12. Steering handlebars 20 are supported to be foldable with a supporting mechanism 21 on the upper end of the steering shaft 11.

A rear arm 25 is disposed, with a displacement to one side (to the left) of the vehicle center 9, to extend rearward from the joining portion 24 where the extended ends of the right and left down tubes 6, 6 and the lower ends of the right and left back stays 7, 7 are laterally interconnected. The fore-end of the rear arm 25 is supported with a pivot-support shaft 26 on the joining portion 24, so that the rear end of the rear arm 25 may swing up and down.

A damper 28 is disposed on the same (left) side as the rear arm 25 is displaced to, so as to interconnect the longitudinal middle portion of the left side back stay 7 and the longitudinal middle portion of the rear arm 25. The damper 28 extends in a straight line downward and rearward with its both longitudinal ends respectively supported with pivot-support shafts 29 to the back stay 7 and to the rear arm 25, respectively.

A rear wheel 32 is rotatably supported with a wheel shaft 31 at the rear end of the rear arm 25. A rear fender 33 made of a plastic material for covering the rear wheel 32 from above is fixed to and supported with the rear arm 25 using front and rear tightening members 34 and 35.

The vehicle body frame 3 of the vehicle body 2 is supported with the front and rear wheels 14 and 32 on the road surface 36 for the vehicle to drive on.

A seat 38 for a rider 37 to sit on is supported with an upper frame 8 of the vehicle body frame 3. A footrest 39 for the rider 37 seated on the seat 38 is supported on the rear part of each of the down tubes 6. A main stand 41 extending in the longitudinal direction of the vehicle is provided below the rear arm 25. The front end of the main stand 41 is pivoted with a shaft 42 to the rear arm 25, so that the rear end of the main stand 41 may swing up and down. The main stand 41 is urged with a spring 43 in the up swing direction.

To park the vehicle 1, the main stand 41 is swung down against the urging force of the spring 43 until its distal ends touch the ground 36, and then the vehicle 1 is made to stand on the ground 36 by means of the front wheel 14 and the main stand 41 (as indicated with a dash-and-dotted lines in FIG. 2).

An electric motor 45 as a source of driving the vehicle 1 is supported on the rear arm 25. The rear wheel 32 is connected for interlocked motion with the output shaft of the electric motor 45. A brake device 46 is provided to brake the rear wheel 32. The brake device 46 is made up of a drum type brake 47 centered on the axis of the rear wheel 32 and a brake operation device 48 for actuating the brake 47 by applying a brake operation force to the brake operation device 48.

The vehicle 1 is provided with an electric power supply 51, a battery. The power supply 51 is detachably mounted on the vehicle body frame 3 by means of a supporting device 52. The power supply 51 is electrically connected to electric and electronic devices 53 that constitute the vehicle. A main switch 54 for making and breaking electrical connection between the power supply 51 and the devices 53 is provided as supported with a supporting device 55 on the vehicle body frame 3. An openable plastic-made cover 56 for shrouding the power supply 51 from the front is detachably attached to the back stays 7 of the vehicle body frame 3.

The above devices 53 include a controller 58 for electronically controlling the electric motor 45, a headlamp 59 for illuminating the front of the vehicle 1, and a meter 60.

The vehicle 1 is made capable of running on the road 36 when the main switch 54 is operated to make electric connection between the power supply 51 and the devices 53 so as to drive the electric motor 45 by supplying electric power through the devices 53 from the power supply 51. While the vehicle 1 is running, the front wheel 14 is steered as the steering operation done by the rider 37 with the handlebars 20 is transmitted to the front wheel 14 through the steering shaft 11 and the front fork 12. Impact forces exerted from the ground 36 to the vehicle 1 are attenuated with the dampers 15 of the front fork 12 provided on the front wheel 14 side and with the damper 28 provided on the rear wheel 32 side.

In reference to all the drawings, the front fork 12 is made up of a bracket 63 supported with the lower end of the steering shaft 11 extending down from the lower end of the head pipe 5, paired right and left upper tubes 65, 65 of a circular cross section with their axes 64 parallel to the axis 4 of the steering shaft 11 and extending down in straight lines from the right and left side portions of the bracket 63, and paired right and left lower tubes 66, 66 of a circular cross section fitted for free axial sliding into the lower end sides of the paired right and left upper tubes 65, 65. The wheel shaft 13 is provided between the lower ends of the right and left lower tubes 66, 66 to support the front wheel 14.

A spring 68 for urging the lower tube 66 downward and a bump stopper 70 for attenuating the impact of the top end of the lower tube 66 to the ceiling surface 69 of the upper tube 65 are provided in the space 67 of each of the upper tubes 65. The spring 68 and the bump stopper 70 constitute the above-mentioned damper 15 of the front fork 12.

The bracket 63 and the right and left upper tubes 65, 65 in the above-described constitution are formed to be integral with each other by aluminum casting.

The upper end 72 of each upper tube 65 is made to protrude above the top surface of each side of the bracket 63. To describe it more concretely, the front fork 12 is formed such that one side of the middle part, in the axial direction, of the upper part of each of the upper tubes 65 is integrally connected to each of the right and left end surfaces, in the direction of the width of the vehicle body 2, of the bracket 63.

With the above constitution, the bracket 63 and the right and left upper tubes 65, 65 are made integral with each other.

Therefore, the front fork 12 is made with a less number of components, and in simpler constitution and forming in comparison with a conventional front fork 12 made by separately forming the bracket 63 and the upper tubes 65, and putting them together.

The top end 72 of each of the upper tubes 65 is made to project beyond the top surface of each of the side portions of the bracket 63.

As a result, the cross-sectional area of the joining portion between the side portions of the bracket 63 of the front fork 12 and the upper tubes 65 is made larger than in an arrangement in which the upper tubes 65, integral with the bracket 63, are simply extended downward from the side portions of the bracket 63.

Therefore, the joining strength between the bracket 63 and the upper tubes 65 of the front fork 12 is increased accordingly.

Moreover, the constitution of the front fork 12 is simple since the front fork 12 is formed such that one side of the middle part, in the axial direction, of the upper part of each of the upper tubes 65 is integrally connected to each of the right and left end surfaces, in the direction of the width of the vehicle body 2, of the bracket 63.

Therefore, dies for integrally cast-forming the front fork 12 are made accordingly simple and in this respect too, forming the front fork 12 is facilitated.

While the above description is in reference to the illustrated example, the vehicle 1 may be three-wheeled. Besides, the drive power source of the vehicle 1 may be an internal combustion engine, and the engine may be disposed separately from the rear arm 25 and supported on the vehicle body frame 3.

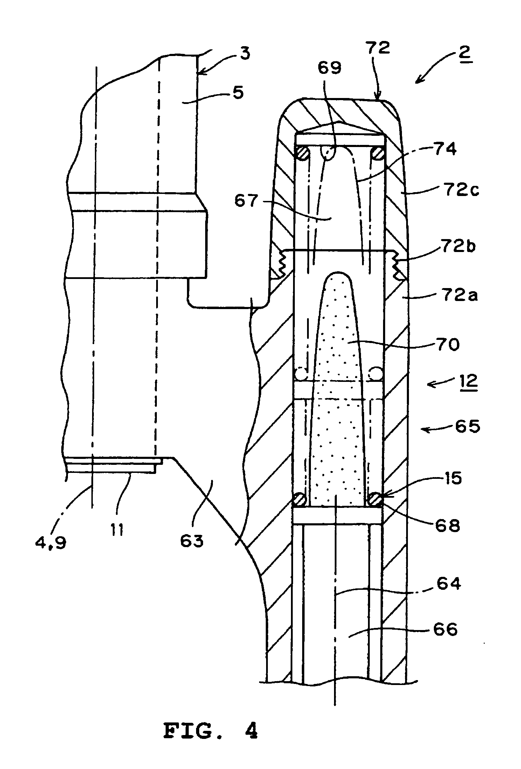

FIG. 4 shows an embodiment of the invention, which has many points in common with the straddling type vehicle of Figures 1-3 in terms of constitution, function, and effects. Therefore, common parts are provided with common reference symbols and their explanations are not repeated, but only different points are explained. The constitutions of various parts of these embodiments may be combined in various ways in the light of the problems of the invention and effects.

According to Figure 4, at least upper parts of the motion locus 74 of the bump stopper 70 and the spring 68 are disposed in the space 67 in the upper end 72 of each of the upper tubes 65.

As a result, the function of damping impact forces is improved without increasing the vertical dimensions of the front fork 12 according to the extent to which the upper end 72 of each of the upper tubes 65 is utilized to dispose the spring 68 and the bump stopper 70.

The upper end portion 72 of each upper tube 65 is made up of a base portion 72a of a pipe shape formed integrally with each side portion of the bracket 63 and protruding up beyond the top surface of each side portion of the bracket 63, and a cap 72c detachably attached by a thread 72b to the upper end of the base portion 72a. The top surface of the internal space 67 of the cap 72c is the ceiling surface 69.

The space 67 may be opened up by removing the cap 72c from the base portion 72a, so that the spring 68 may be installed or removed through the opening of the base portion 72a.

A constitution of a front fork for a straddling type of vehicle comprises a steering shaft supported for free turning about its longitudinal axis at a front upper end portion of a vehicle body frame and the front fork with its upper end supported with the lower end of the steering shaft, with the front fork being made up of: a bracket supported with the lower end of the steering shaft, paired right and left upper tubes extending down in straight lines from the right and left side portions of the bracket, and paired right and left lower tubes fitted for free axial sliding into the lower end sides of the paired right and left upper tubes wherein the bracket and the right and left upper tubes are formed integrally with each other.

Therefore, the front fork is made with a less number of components, and in simpler constitution and forming in comparison with a conventional front fork made by separately forming the bracket and the upper tubes, and putting them together.

Besides, the upper end portions of the respective upper tubes are extended up beyond the top surface of the right and left side portions of the bracket.

As a result, the cross-sectional area of the joining portion between the side portions of the bracket of the front fork and the upper tubes is made larger than in an arrangement in which the upper tubes are simply extended downward from the side portions of the bracket.

Therefore, the joining strength of the front fork, particularly between the bracket and the upper tubes of the front fork, is increased accordingly.

Moreover, the constitution of the front fork is simple since the front fork is formed such that one side of the middle part, in the axial direction, of the upper part of each of the upper tubes is integrally connected to each of the right and left end surfaces, in the direction of the width of the vehicle body, of the bracket.

Therefore, dies for integrally cast-forming the front fork are made accordingly simple and in this respect too, forming the front fork is facilitated.

Moreover, the respective lower tubes are fitted into the extended end sides of the respective upper tubes, and with springs far urging downward the respective lower tubes being provided in the spaces in the respective upper tubes, wherein at least part of the spring is placed in the space within the upper end of the upper tube.

As a result, the function of damping impact farces is improved without increasing the vertical dimensions of the front fork according to the extent to which the upper end of each of the upper tubes is utilized to dispose the spring and the bump stopper.

A front fork 12 with its upper end supported with the lower end of a steering shaft 11 is made up of: a bracket 63 supported with the lower end of the steering shaft 11, paired right and left upper tubes 65, 65 extending dawn in straight lines from the right and left side portions of the bracket 63, and paired right and left lower tubes 66, 66 fitted for free axial sliding into the lower end sides of the paired right and left upper tubes 65, 65. The bracket 63 and the right and left upper tubes 65, 65 are formed to be integral with each other. The upper end portion 72 of each upper tube 65 is made to protrude beyond the top surface of each side of the bracket 63.

## Claims

1. Straddling type vehicle (1) having a vehicle body (2) with a main frame (3) and a front steering construction connected thereto via a steering shaft (11) for free turning about its longitudinal axis (4), said front steering construction comprising a front fork (12) supported by means of a bracket (63) connecting a pair of right and left tubes (65, 65), said bracket (63) and said right and left tubes (65, 65) being formed integrally with each other,
**characterized in that**
the front fork (12) is supported at a lower end of the steering shaft (11) by the bracket (63), lower tubes (66, 66) are slidably fitted into the respective right and left tubes (65, 65), the right and left tubes (65, 65) are extended beyond top surfaces of right and left side portions of the bracket (63), and at least upper ends of springs (68, 68) for urging downward said respective lower tubes (66, 66) are disposed within the right and left tubes (65, 65) over the top surfaces of the right and left side portions of said bracket (63).

2. Straddling type vehicle (1) according to claim 1, **characterized in tha**t said paired right and left tubes (65,65) extend downwards along straight axes (64) from right and left side portions of said bracket.

3. Straddling type vehicle (1) according to claim 1 or 2, **characterized in that** one side of the middle part, in axial direction, of an upper part of each of the tubes (65,65) is integrally connected to each of the right and left end surfaces of the bracket (63) in the direction of width of the vehicle body (2).

4. Straddling type vehicle (1) according to one of the preceding claims 1 to 3, **characterized in that** paired right and left second lower tubes (66,66) are fitted for free axial sliding into the lower end sides of said paired right and left first upper tubes (65,65).

5. Straddling type vehicle (1) according to one of the preceding claims 1 to 4, **characterized in that** upper end portions (72,72) of said respective first, upper tubes (65,65) are extended up beyond the top surfaces of said right and left side portions of said bracket (63).

6. Straddling type vehicle (1) according to claim 4 or 5, **characterized in that** springs (68,68) for urging downward said respective lower tubes (66,66) are provided in spaces (67,67) in said respective first upper tubes (65,65).

7. Straddling type vehicle (1) according to claim 6, **characterized in tha**t at least parts of said springs (68,68) are placed in the spaces (67,67) within the upper ends of said first upper tubes (65,65) extending up beyond the top surfaces of said right and left side portions of said bracket (63).

8. Straddling type vehicle (1) according to claim 6 or 7, **characterized in that** bump stoppers (70) for attenuating the impact of the top end of the lower tubes (66,66) to ceiling surfaces (69,69) of the upper tubes (65,65) are provided in the spaces (67,67) of each of the first upper tubes (65,65).

9. Straddling type vehicle (1) according to at least one of the preceding claims 1 to 8, **characterized in that** the bracket (63) and the right and left upper tubes (65,65) are formed to be integral with each other by aluminium casting.

10. Straddling type vehicle (1) according to one of the preceding claims 1 to 9, **characterized in that** said vehicle (1) is a two-wheeled vehicle or a three-wheeled vehicle.

11. Straddling type vehicle (1) according to one of the preceding claims 8 to 10, **characterized in that** at least upper parts of a motion locus (74) of the bump stopper (70) and the spring (68) are disposed in the space (67) in the upper end (72) of each of the upper tubes (65).

12. Straddling type vehicle according to one of the preceding claims 1 to 11, **characterized in that** the upper end portion (72) of each upper tube (65) is made up of a base portion (72a) of a pipe shape formed integrally with each side portion of the bracket (63) and protruding up beyond the top surface of each side portion of the bracket (63) and a cap (72c) detachably attached to the upper end of the base portion (72a).

13. Straddling type vehicle (1) according to at least one of the preceding claims 1 to 11, **characterized in that** an electric power supply, in particular a battery (51) is provided with said vehicle (1).

14. Straddling type vehicle (1) according to one of the preceding claims 1 to 12, **characterized in that** a drive power source, in particular an internal combustion engine is provided with said vehicle (1).

15. Straddling type vehicle (1) according to one of the preceding claims 1 to 12, **characterized in that** a drive power source, in particular an electric motor (45) is provided with said vehicle (1).

## Patentansprüche

1. Fahrzeug vom Grätschsitz- Typ (1) mit einer Fahrzeugkarosserie (2) mit einem Hauptrahmen (3) und einer vorderen Lenkkonstruktion, daran über eine Lenkwelle (11) zum freien Drehen um ihre Längsachse (4) verbunden; wobei die vordere Lenkkonstruktion aufweist eine Vordergabel (12), gelagert mittels einer Halterung (63), die ein Paar von rechten und linken Rohren (65, 65) verbindet, wobei die Halterung (63) und die rechten und linken Rohre (65, 65) miteinander einstückig gebildet sind,
**dadurch gekennzeichnet, dass**
die Vordergabel (12) an einem unteren Ende der Lenkwelle (11) durch die Halterung (63) gelagert ist, die unteren Rohre (66, 66) gleitbar eingesetzt sind in die jeweiligen rechten und linken Rohre (65, 65), die rechten und linken Rohre (65, 65) sich über die oberen Oberflächen der rechten und linken Seitenabschnitte der Halterung (63) hinaus erstrecken sind, und zumindest obere Enden der Federn (68, 68) zum Drücken der jeweiligen unteren Rohre (66, 66) nach unten, innerhalb der rechten und linken Rohre (65, 65) über den oberen Oberflächen der rechts- und linkseitigen Abschnitte der Halterung (63) angeordnet sind.

2. Fahrzeug vom Grätschsitz- Typ (1) nach Anspruch 1, **dadurch gekennzeichnet, dass** die paarweisen rechten und linken Rohre (65, 65) sich entlang gerader Achsen (64) von den rechten und linken Abschnitten der Halterung nach unten erstrecken.

3. Fahrzeug vom Grätschsitz- Typ (1) nach Anspruch 1 oder 2, **dadurch gekennzeichnet, dass** eine Seite des mittleren Teils, in axialer Richtung, eines oberen Teils jedes der Rohre (65, 65) mit jedem der rechts- und linkseitigen Endoberflächen der Halterung (63) in der Richtung der Breite der Fahrzeugkarosserie (2) einstückig verbunden ist.

4. Fahrzeug vom Grätschsitz- Typ (1) nach einem der vorhergehenden Ansprüche 1 bis 3, **dadurch gekennzeichnet, dass** paarweise rechte und linke zweite untere Rohre (66, 66) zum freien axialen Gleiten in die unteren Endseiten der paarweisen rechten und linken ersten oberen Rohre (65, 65) eingesetzt sind.

5. Fahrzeug vom Grätschsitz- Typ (1) nach einem der vorhergehenden Ansprüche 1 bis 4, **dadurch gekennzeichnet, dass** obere Endabschnitte (72, 72) der jeweiligen ersten oberen Rohre (65, 65) sich nach oben über die oberen Oberflächen der rechts- und linksseitigen Abschnitte der Halterung (63) hinaus erstrecken.

6. Fahrzeug vom Grätschsitz- Typ (1) nach Anspruch 4 oder 5, **dadurch gekennzeichnet, dass** die Federn (68, 68) zum Drücken der jeweiligen unteren Rohre (66, 66) nach unten in Räumen (67, 67) in den jeweiligen ersten oberen Rohren (65, 65) vorgesehen sind.

7. Fahrzeug vom Grätschsitz- Typ (1) nach Anspruch 6, **dadurch gekennzeichnet, dass** zumindest Teile der Federn (68, 68) in den Räumen (67, 67), die innerhalb der oberen Enden der ersten oberen Rohre (65, 65) platziert sind, sich nach oben über die obere Oberflächen der rechts- und linksseitigen Abschnitte der Halterung (63) erstrecken.

8. Fahrzeug vom Grätschsitz- Typ (1) nach Anspruch 6 oder 7, **dadurch gekennzeichnet, dass** Stoßdämpfer (70) zum Dämpfen des Stoßes des oberen Endes der untere Rohre (66, 66) zu den Deckenoberflächen (69, 69) der oberen Rohre (65, 65) in den Räumen (67, 67) von jedem der ersten oberen Rohre (65, 65) vorgesehen sind.

9. Fahrzeug vom Grätschsitz- Typ (1) nach zumindest einem der vorhergehenden Ansprüche 1 bis 8, **dadurch gekennzeichnet, dass** die Halterung (63) und die rechts- und linksseitigen oberen Rohre (65, 65) gebildet sind, um durch Aluminiumgießen miteinander einstückig zu sein.

10. Fahrzeug vom Grätschsitz- Typ (1) nach einem der vorhergehenden Ansprüche 1 bis 9, **dadurch gekennzeichnet, dass** das Fahrzeug (1) ein zweirädriges Fahrzeug oder ein dreirädriges Fahrzeug ist.

11. Fahrzeug vom Grätschsitz- Typ (1) nach einem der vorhergehenden Ansprüche 8 bis 10, **dadurch gekennzeichnet, dass** zumindest obere Teile eines Bewegungsortes (74) des Stoßdämpfers (70) und der Feder (68) in dem Raum (67) in dem oberen Ende (72) jedes der oberen Rohre (65) angeordnet sind.

12. Fahrzeug vom Grätschsitz- Typ (1) nach einem der vorhergehenden Ansprüche 1 bis 11, **dadurch gekennzeichnet, dass** der obere Endabschnitt (72) jedes oberen Rohres (65) aus einem Basisabschnitt (72a) aufgebaut ist aus einer Rohrform, einstückig gebildet mit jedem Seitenabschnitt der Halterung (63) und nach oben über die obere Oberfläche jedes Seitenabschnittes der Halterung (63) hinaus vorspringend, und eine Kappe (72c), die mit dem oberen Ende des Basisabschnittes (72a) lösbar verbunden ist.

13. Fahrzeug vom Grätschsitz- Typ (1) nach zumindest einem der vorhergehenden Ansprüche 1 bis 11, **dadurch gekennzeichnet, dass** eine elektrische Energiezuführung, insbesondere eine Batterie (51) bei dem Fahrzeug (1) vorgesehen ist.

14. Fahrzeug vom Grätschsitz- Typ (1) nach einem der vorhergehenden Ansprüche 1 bis 12, **dadurch gekennzeichnet, dass** eine Antriebsenergiequelle, insbesondere eine Brennkraftmaschine bei dem Fahrzeug (1) vorgesehen ist.

15. Fahrzeug vom Grätschsitz- Typ (1) nach einem der vorhergehenden Ansprüche 1 bis 12, **dadurch gekennzeichnet, dass** eine Antriebsenergiequelle, insbesondere ein Elektromotor (45) bei dem Fahrzeug (1) vorgesehen ist.

## Revendications

1. Véhicule du type à enfourchement (1) ayant un corps de véhicule (2) ayant un châssis principal (3) et une construction de direction avant reliée à celui-ci par l'intermédiaire d'un arbre de direction (11) destiné à tourner librement autour de son axe longitudinal (4), ladite construction de direction avant comportant une fourche avant (12) supportée par l'intermédiaire d'un montant (63) reliant une paire de tubes droit et gauche (65, 65), ledit montant (63) et lesdits tubes droit et gauche (65, 65) étant formés d'un seul tenant les uns avec les autres,
**caractérisé en ce que**
la fourche avant (12) est supportée au niveau d'une extrémité inférieure de l'arbre de direction (11) par le montant (63), des tubes inférieurs (66, 66) sont agencés de manière coulissante dans les tubes droit et gauche respectifs (65, 65), les tubes droit et gauche (65, 65) sont étendus au-delà des surfaces supérieures des parties latérales droite et gauche du montant (63), et au moins les extrémités supérieures de ressorts (68, 68) destinés à repousser vers le bas lesdits tubes inférieurs respectifs (66, 66) sont disposées dans les tubes droit et gauche (65, 65) au-dessus des surfaces supérieures des parties latérales droite et gauche dudit montant (63).

2. Véhicule du type à enfourchement (1) selon la revendication 1, **caractérisé en ce que** lesdits tubes droit et gauche appariés (65, 65) s'étendent vers le bas le long d'axes rectilignes (64) à partir des parties latérales droite et gauche dudit montant.

3. Véhicule du type à enfourchement (1) selon la revendication 1 ou 2, **caractérisé en ce qu'**un côté de la partie médiane dans la direction axiale, d'une partie supérieure de chacun des tubes (65, 65) est relié d'un seul tenant à chacune des surfaces d'extrémité droite et gauche du montant (63) dans la direction de la largeur du corps de véhicule (2).

4. Véhicule du type à enfourchement (1) selon l'une quelconque des revendications 1 à 3, **caractérisé en ce que** des seconds tubes inférieurs droit et gauche appariés (66, 66) sont agencés pour avoir un coulissement axial libre dans les côtés d'extrémité inférieurs desdits premiers tubes supérieurs (65, 65) droit et gauche appariés.

5. Véhicule du type à enfourchement (1) selon l'une quelconque des revendications 1 à 4, **caractérisé en ce que** des parties d'extrémité supérieure (72, 72) desdits premiers tubes supérieurs respectifs (65, 65) sont étendues vers le haut au-delà des surfaces supérieures desdites parties latérales droite et gauche dudit montant (63).

6. Véhicule du type à enfourchement (1) selon la revendication 4 ou 5, **caractérisé en ce que** des ressorts (68, 68) pour repousser vers le bas lesdits tubes inférieurs respectifs (66, 66) sont agencés dans des espaces (67, 67) situés dans lesdits premiers tubes supérieurs respectifs (65, 65).

7. Véhicule du type à enfourchement (1) selon la revendication 6, **caractérisé en ce qu'**au moins des parties desdits ressorts (68, 68) sont placées dans les espaces (67, 67) situés dans les extrémités supérieures desdits premiers tubes supérieurs (65, 65) s'étendant vers le haut au-delà des surfaces supérieures desdites parties latérales droite et gauche dudit montant (63).

8. Véhicule du type à enfourchement (1) selon la revendication 6 ou 7, **caractérisé en ce que** des butées formant bosse (70) destinées à atténuer l'impact de l'extrémité supérieure desdits tubes inférieurs (66, 66) sur des surfaces de plafond (69, 69) des tubes supérieurs (65, 65) sont agencées dans les espaces (67, 67) de chacun des premiers tubes supérieurs (65, 65).

9. Véhicule du type à enfourchement (1) selon l'une quelconque des revendications 1 à 8, **caractérisé en ce que** le montant (63) et les tubes supérieurs droit et gauche (65, 65) sont formés pour être d'un seul tenant les uns avec les autres par moulage d'aluminium.

10. Véhicule du type à enfourchement (1) selon l'une quelconque des revendications 1 à 9, **caractérisé en ce que** ledit véhicule (1) est un véhicule à deux roues ou un véhicule à trois roues.

11. Véhicule du type à enfourchement (1) selon l'une quelconque des revendications 8 à 10, **caractérisé en ce qu'**au moins des parties supérieures du lieu géométrique de déplacement (74) de la butée formant bosse (70) et le ressort (68) sont disposés dans l'espace (67) situé dans l'extrémité supérieure (72) de chacun des tubes supérieurs (65).

12. Véhicule du type à enfourchement (1) selon l'une quelconque des revendications 1 à 11, **caractérisé en ce que** la partie d'extrémité supérieure (72) de chaque tube supérieur (65) est composée d'une partie de base (72a) ayant une forme de tuyau formé d'un seul tenant avec chaque partie latérale du montant (63) et faisant saillie au-delà de la surface supérieure de chaque partie latérale du montant (63) et d'un capuchon (72c) fixé de manière détachable sur l'extrémité supérieure de la partie de base (72a).

13. Véhicule du type à enfourchement (1) selon l'une quelconque des revendications 1 à 11, **caractérisé en ce qu'**une alimentation en courant électrique, en particulier une batterie (51), est agencée sur ledit véhicule (1).

14. Véhicule du type à enfourchement (1) selon l'une quelconque des revendications 1 à 12, **caractérisé en ce qu'**une source d'énergie d'entraînement, en particulier un moteur à combustion interne, est agencée sur ledit véhicule (1).

15. Véhicule du type à enfourchement (1) selon l'une quelconque des revendications 1 à 12, **caractérisé en ce qu'**une source d'énergie d'entraînement, en particulier un moteur électrique (45), est agencée sur ledit véhicule (1).
